# EUROPEAN PATENT APPLICATION

(11) **EP 1 601 169 A1**
(43) Date of publication of application: **30.11.2005**
(21) Application number: 04253180.6
(22) Date of filing: 28.05.2004
(51) Int. Cl.: H04M 1/2745, H04M 1/247

(54) **User interface method and apparatus for initiating telephone calls to a telephone number contained in a message received by a mobile station.**

(71) Applicant: Research In Motion Limited, Waterloo, Ontario N2L 3W8 (CA)
(72) Inventor: Kuhl, Lawrence Edward, waterloo Ontario N2V 2G9 (CA); Vander Veen, Raymond Paul, Waterloo Ontario N2V 2M6 (CA)
(74) Representative: Hibbert, Juliet Jane Grace

(57) **Abstract**

In one illustrative example, a mobile station includes one or more processors, a wireless transceiver coupled to the one or more processors, and a user interface which includes a visual display and a plurality of keys. The wireless transceiver is operative to receive a message which includes a telephone number string. When the message is visually displayed in the visual display, a hypcrlink for the telephone number string in the message is created. The hyperlink for the telephone number string is highlighted when selected by an end user during the visual displaying of the message. In response to a single depression of a SEND key while the hyperlink is selected, a telephone call to the telephone number string is initiated through the wireless communication network. Detection of the key is made immediately following the selection of the hyperlink without any intervening key depressions. Additional call initiation techniques are provided in combination with this technique to provide an even more flexible and easy-to-use interface.

## Description

### BACKGROUND

### Field of the Technology

The present invention relates generally to mobile stations which operate in wireless communication networks, and more particularly to user interface methods and apparatus for initiating telephone calls from a mobile station.

### Description of the Related Art

Mobile communication devices, such as cellular telephones or mobile e-mail devices, are becoming increasingly ubiquitous. Many present-day mobile devices provide easy-to-use user interfaces for the input and output of user information. For example, a mobile device may provide an interactive graphical user interface (GUI) for several primary applications of the mobile device (e.g. e-mail or Web browsing applications). Conventionally, however, the user interface may not provide a suitable interface for both voice telephony and data/text applications. To minimize operating confusion, there has often been the need to provide consistency in the user interface for both voice and data/text applications. Data/text applications, however, are typically more complex than the voice application. Thus, it would be advantageous to simplify the user interface of the mobile device for initiating telephone calls for convenience and ease-of-use so as to overcome the deficiencies in the prior art.

### SUMMARY

One illustrative example of the present invention involves a mobile station which includes one or more processors, a wireless transceiver coupled to the one or more processors, and a user interface which includes a visual display and a plurality of keys. The wireless transceiver is operative to receive a message, such as an e-mail message, which includes a telephone number string. When the message is visually displayed in the visual display, a hyperlink for the telephone number string in the message is created. The hyperlink for the telephone number string is highlighted when selected by an end user during the visual displaying of the message.

In response to a single depression of a key of the user interface while the hyperlink is selected, a telephone call to the telephone number string is initiated through the wireless communication network. The single depression of the key may be made immediately following the selection of the hyperlink without any intervening key depressions. Additional call initiation techniques are provided in combination with this technique to provide an even more flexible and easy-to-use interface.

### BRIEF DESCRIPTION OF THE DRAWINGS

Embodiments of present invention will now be described by way of example with reference to attached figures, wherein:
FIG. 1 is a block diagram which illustrates pertinent components of a mobile station and a wireless communication network;
FIG. 2 is a more detailed diagram of a preferred mobile station of FIG. 1;
FIG. 3 is an illustration of a front side of an exemplary mobile station showing a user interface which includes a visual display and a plurality of keys;
FIG. 4 is a flowchart which describes a user interface method of initiating telephone calls from the mobile station of FIGs. 1-3;
FIG. 5 is an illustration of the mobile station of FIG. 3, except that a message having a hyperlink for a telephone number string is being displayed in the visual display;
FIG. 6 is an illustration of the mobile station of FIG. 5, except that the hyperlink for the telephone number string is selected by the end user with use of a scrollwheel and highlighted in the visual display;
FIG. 7 is an illustration of the mobile station of FIG. 6, except that the scrollwheel has been depressed during the selection of the hyperlink to provide a list of functions for the telephone number string;
FIG. 8 is an illustration of the mobile station of FIG. 6, except that a SEND key has been depressed during the selection of the hyperlink to initiate a telephone call to the telephone number string;
FIG. 9 is a plan view of the scrollwheel that may be utilized in the mobile station; and
FIG. 10 is a side view of the scrollwheel of the mobile station.

### DETAILED DESCRIPTION OF THE PREFERRED EMBODIMENTS

One illustrative example of the present techniques involves a mobile station which includes one or more processors, a wireless transceiver coupled to the one or more processors, and a user interface which includes a visual display and a plurality of keys. The wireless transceiver is operative to receive a message, such as an e-mail message, which includes a telephone number string. When the message is visually displayed in the visual display, a hyperlink for the telephone number string in the message is created. The hyperlink for the telephone number string is highlighted when selected by an end user during the visual displaying of the message. In response to a single depression of a key of the user interface while the hyperlink is selected, a telephone call to the telephone number string is initiated through the wireless communication network. The single depression of the key may be made immediately following the selection of the hyperlink without any intervening key depressions. Additional call initiation techniques are provided in combination with this technique to provide a flexible and easy-to-use interface.

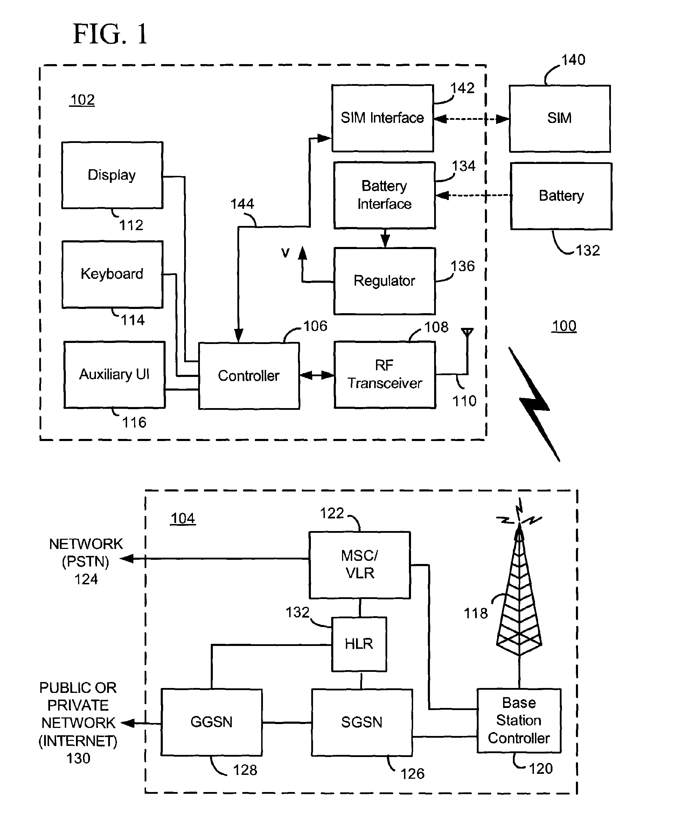

FIG. 1 is a block diagram of a communication system 100 which includes a mobile station 102 which communicates through a wireless communication network 104. In the embodiment of FIG. 1, wireless network 104 is configured in accordance with General Packet Radio Service (GPRS) and a Global Systems for Mobile (GSM) technologies; however, any suitable type of network communication protocols may be utilized. For example, the network may be based on code division multiple access (CDMA) or other suitable technologies. As another example, the network may be based on an Integrated Dispatch Enhanced Network (iDEN) which is a high-capacity digital trunked radio system providing integrated voice and data services.

Mobile station 102, which is one type of mobile communication device, preferably includes a visual display 112, a keyboard 114, and perhaps one or more auxiliary user interfaces (UI) 116, each of which are coupled to a controller 106. Controller 106 is also coupled to radio frequency (RF) transceiver circuitry 108 and an antenna 110. Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from network 104 over a wireless link via antenna 110. RF transceiver circuitry 108 performs functions similar to those of station 118 and base station controller 120, including for example modulation/demodulation and possibly encoding/decoding and encryption/decryption. It is also contemplated that RF transceiver circuitry 108 may perform certain functions in addition to those performed by base station controller 120. It will be apparent to those skilled in art that RF transceiver circuitry 108 will be adapted to particular wireless network or networks in which mobile station 102 is intended to operate.

Mobile station 102 includes a battery interface 134 for receiving one or more rechargeable batteries 132. Battery 132 provides electrical power to electrical circuitry in mobile station 102, and battery interface 132 provides for a mechanical and electrical connection for battery 132. Battery interface 132 is coupled to a regulator 136 which regulates power to the device. When mobile station 102 is fully operational, an RF transmitter of RF transceiver circuitry 108 is typically keyed or turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface 142. SIM 140 is one type of a conventional "smart card" used to identify an end user (or subscriber) of mobile station 102 and to personalize the device, among other things. Without SIM 140, the mobile station terminal is not fully operational for communication through wireless network 104. By inserting SIM 140 into mobile station 102, an end user can have access to any and all of his/her subscribed services. SIM 140 generally includes a processor and memory for storing information. Since SIM 140 is coupled to SIM interface 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including datebook (or calendar) information and recent call information.

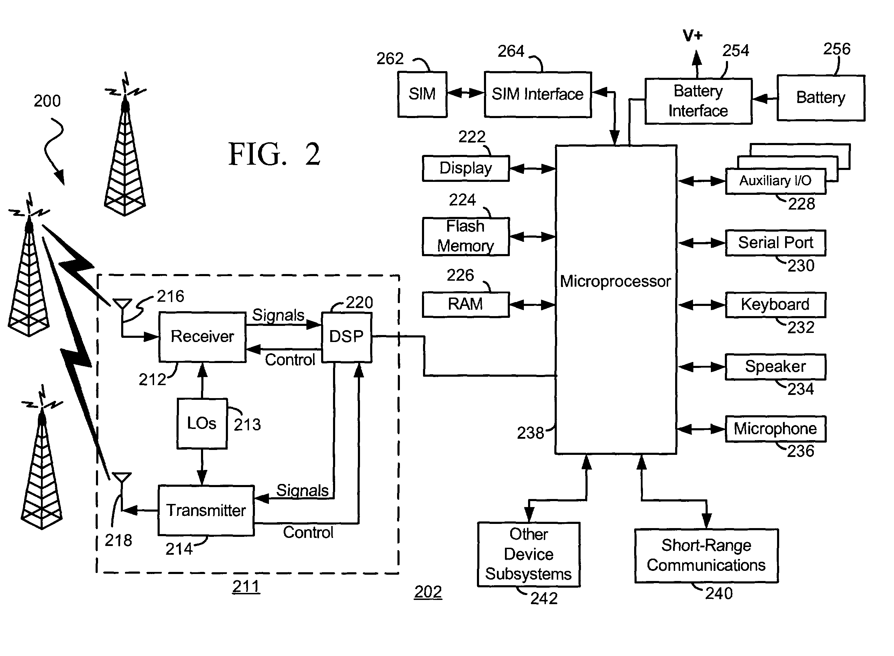

Mobile station 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of FIG. 2.

Mobile station 102 communicates in and through wireless communication network 104. In the embodiment of FIG. 1, wireless network 104 is configured in accordance with General Packet Radio Service (GPRS) and a Global Systems for Mobile (GSM) technologies. Wireless network 104 includes a base station controller (BSC) 120 with an associated tower station 118, a Mobile Switching Center (MSC) 122, a Home Location Register (HLR) 132, a Serving General Packet Radio Service (GPRS) Support Node (SGSN) 126, and a Gateway GPRS Support Node (GGSN) 128. MSC 122 is coupled to BSC 120 and to a landline network, such as a Public Switched Telephone Network (PSTN) 124. SGSN 126 is coupled to BSC 120 and to GGSN 128, which is in turn coupled to a public or private data network 130 (such as the Internet). HLR 132 is coupled to MSC 122, SGSN 126, and GGSN 128.

Station 118 is a transceiver station, and station 118 and BSC 120 are together referred to herein as the transceiver equipment. This fixed transceiver equipment provides wireless network coverage for a particular coverage area commonly referred to as a "cell". The transceiver equipment transmits communication signals to and receives communication signals from mobile stations within its cell via station 118. The transceiver equipment normally performs such functions as modulation and possibly encoding and/or encryption of signals to be transmitted to the mobile station in accordance with particular, usually predetermined, communication protocols and parameters, under control of its controller. The transceiver equipment similarly demodulates and possibly decodes and decrypts, if necessary, any communication signals received from mobile station 102 within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and mobile station 102. Those skilled in art will appreciate that a wireless network in actual practice may include hundreds of cells, each served by a station 118 (i.e. or station sector), depending upon desired overall expanse of network coverage. All pertinent components may be connected by multiple switches and routers (not shown), controlled by multiple network controllers.

For all mobile station's 102 registered with a network operator, permanent data (such as mobile station 102 user's profile) as well as temporary data (such as mobile station's 102 current location) are stored in HLR 132. In case of a voice call to mobile station 102, HLR 132 is queried to determine the current location of mobile station 102. A Visitor Location Register (VLR) of MSC 122 is responsible for a group of location areas and stores the data of those mobile stations that are currently in its area of responsibility. This includes parts of the permanent mobile station data that have been transmitted from HLR 132 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of mobile stations. SGSN 126 also performs security functions and access control. Gateway GPRS Support Node (GGSN) 128 provides interworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM. In conventional operation, cell selection may be performed autonomously by mobile station 102 or by the fixed transceiver equipment instructing mobile station 102 to select a particular cell. Mobile station 102 informs wireless network 104 when it reselects another cell or group of cells, known as a routing area.

In order to access GPRS services, mobile station 102 first makes its presence known to wireless network 104 by performing what is known as a GPRS "attach". This operation establishes a logical link between mobile station 102 and SGSN 126 and makes mobile station 102 available to receive, for example, pages via SGSN, notifications of incoming data, or SMS messages over GPRS. In order to send and receive GPRS data, mobile station 102 assists in activating the packet data address that it wants to use. This operation makes mobile station 102 known to GGSN 128; interworking with external data networks can thereafter commence. User data may be transferred transparently between mobile station 102 and the external data networks using, for example, encapsulation and tunneling. Data packets are equipped with GPRS-specific protocol information and transferred between mobile station 102 and GGSN 128.

FIG. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver stations 200 within its geographic coverage area.

Mobile station 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Mobile station 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a Subscriber Identity Module or "SIM" card 262 to be inserted in a SIM interface 264 in order to operate in the network. SIM 262 includes those features described in relation to FIG. 1. Mobile station 202 is a battery-powered device so it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown) which provides power V+ to all of the circuitry.

Mobile station 202 includes a microprocessor 238 (which is one implementation of controller 106 of FIG. 1) which controls overall operation of mobile station 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, will normally be installed on mobile station 202 during its manufacture. This also includes the software for executing the user interface techniques of the present application. A preferred application which is loaded onto mobile station 202 may be a personal information manager (PIM) application having the ability to organize and manage data items relating to e-mail messages and voicemail messages, as well as calendar data. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238.

In a data communication mode, a received signal such as a text message (e.g. a short message service or SMS message), an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth™ communication module to provide for communication with similarly-enabled systems and devices. Bluetooth™ is a registered trademark of Bluetooth SIG, Inc.

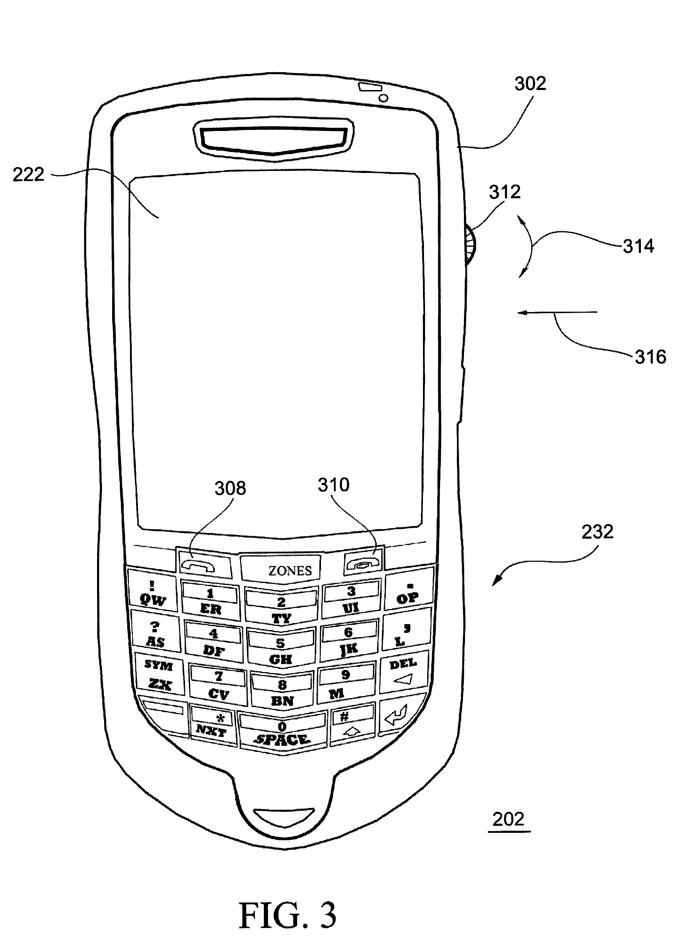

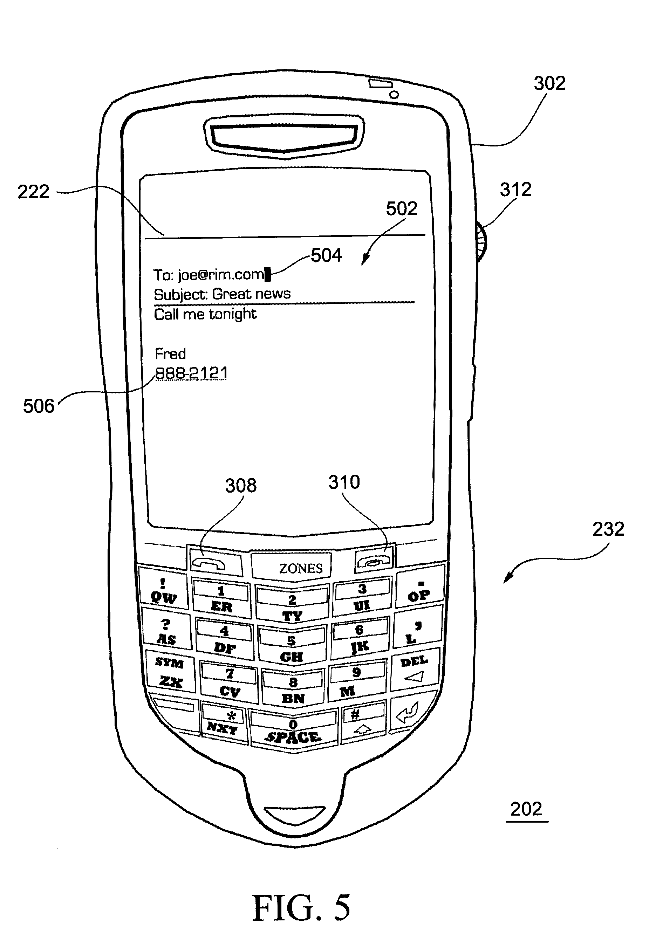

FIG. 3 is a visual illustration of a front side of an exemplary mobile station 202 which may be used for the present user interface techniques. Mobile station 202 of FIG. 3 has a housing 302 which contains the electronic circuitry and components shown and described in relation to FIGs. 1-2. Housing 302 of mobile station 202 includes a user interface having visual display 222 and keypad 232 with a plurality of keys as generally earlier shown and described in relation to FIG. 2. As will be revealed in more detail in relation to FIGs. 5-8, visual display 222 is used to visually display information and messages for the end user. As shown in FIG. 3, the plurality of keys of keypad 232 include a plurality of telephone digit keys (0, 1, 2, 3, 4, 5, 6, 7, 8, 9, *, and #) as well as control keys including a SEND key 308 (having a telephone handset icon inscribed thereon) and an END key 310 (having a telephone handset hang-up icon inscribed thereon). SEND and END keys 308 and 310 are mechanical switches of the mobile station which are detectable at switch inputs of the mobile station. In general, SEND key 308 is used by the end user for initiating a telephone call from mobile station 202 through the wireless network, and END key 310 is used by the end user for terminating the telephone call. Note that both SEND and END keys 308 and 310 are carried and exposed on a front side of housing 302. SEND key 308 may be alternatively designated as an ENTER key, an OK key, a START key, an ACCEPT key, etc.; similarly, END key 310 may be alternatively designated as a STOP key, a NO key, a DECLINE key, etc. Note that SEND and END keys 308 and 310 may alternatively be visual objects which are displayed in visual display 222 and detectable to the touch if visual display 222 is a touch screen display or other similar input device.

Given the relatively large size of visually displayed information and the compact size of visual display 222, information and messages are typically only partially presented in the limited view of visual display 222 at any given moment. Thus, mobile station 202 of FIG. 3 also includes an information viewing/selection mechanism for use with visual display 222. In the present embodiment, the information viewing/selection mechanism of mobile station 202 is a scrollwheel 312. Scrollwheel 312 is positioned on a right hand side of housing 302. Scrollwheel 312 generally includes a circular disc which is rotable about a fixed axis of housing 302, and may be rotated by the end user's index finger or thumb. See the directions indicated by a rotation arrow 314 of scrollwheel 312 shown in FIG. 3. When the information or message is being partially displayed, an upwards rotation of scrollwheel 312 causes an upwards scrolling such that visual display 222 presents viewing of an upper portion of the information or message. Similarly, a downwards rotation of scrollwheel 312 causes a downwards scrolling such that visual display 222 presents viewing of a lower portion of the information or message. Note also that scrollwheel 312 is mounted along a fixed linear axis such that the end user can depress scrollwheel 312 inwards toward housing 312 (e.g. with the end user's index finger or thumb) for selection of information. See the directions indicated by an arrow 316 of scrollwheel 312 shown in FIG. 3.

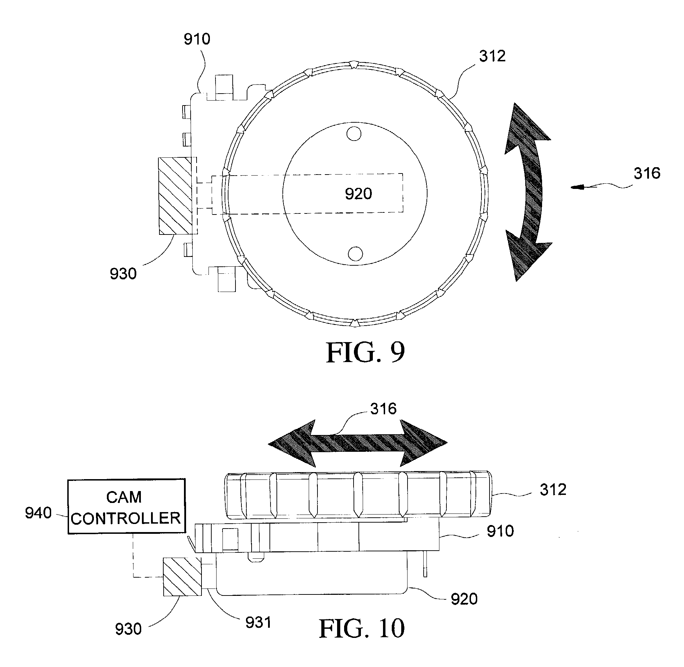

A more detailed mechanism for scrollwheel 312 is now described in relation to FIGs. 9 and 10. Scrollwheel 312 of FIGs. 9-10 is shown connected to and rotatable about a body assembly 910. Body assembly 910 may be connected to or be part of a slide assembly 920. Slide assembly 920 allows the entirety of scrollwheel 312 and body assembly 910 to move freely laterally 316 with respect to the handheld device. Lateral scrollwheel movement 316 is defined as movement along a plane normal to the rotational axis of scrollwheel 312. To control this lateral movement 312, slide assembly 920 may be connected to a control mechanism such as a cam mechanism 930 with a cam 931, or alternatively a level mechanism, a solenoid mechanism, or some other actuating means. Cam mechanism 930 is connected to a cam controller 940 (FIG. 10 only) responsible for controlling a lateral position of scrollwheel 312. As cam 931 connected to cam mechanism 930 and slide assembly 920 moves, scrollwheel 312 and body assembly 910 accordingly move laterally. Such lateral movement inwards toward the housing is detectable by the processor of the mobile station as a switch input (actuation or depression of the scrollwheel key).

Although scrollwheel 312 of FIGs. 3, 9, and 10 has been shown and described as the preferred mechanism for use in viewing and selecting visually displayed information, any suitable viewing/selection mechanism may be utilized for the present user interface techniques to be described, such as UP and DOWN keys, a mouse and cursor mechanism, or a touch screen display mechanism.

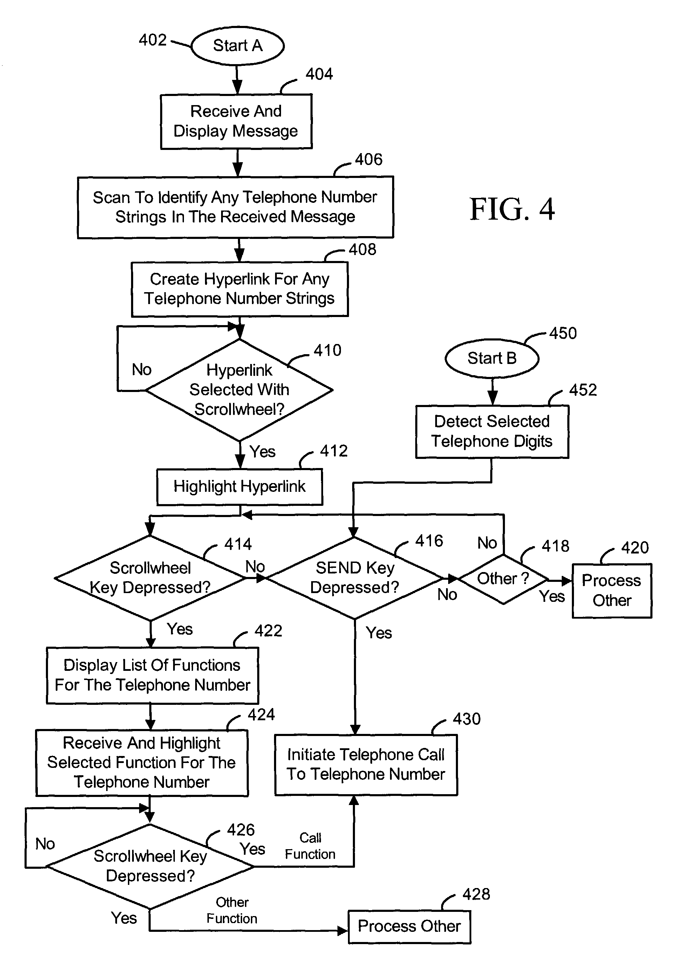

FIG. 4 is a flowchart for describing a user interface method of initiating telephone calls from a mobile station of the present application. The method may be performed with use of a mobile station operating in the wireless network as described in relation to FIGs. 1-3. In combination with the flowchart of FIG. 4, reference will be made to the visual illustrations of the mobile station in FIGs. 5-10. A computer program product for the mobile station may include computer instructions stored on a storage medium (memory, a floppy disk or CD-ROM) which are written in accordance with the described logic of this method.

Beginning at a start block 402 of FIG. 4 ("Start A"), a message is received through a wireless receiver of the mobile station and displayed in a visual display (step 404 of FIG. 4). The message may be an electronic mail (e-mail) message or information of a web page, as examples. The message may include a telephone number string in a conventional telephone number format. For example, the telephone number string may be "888 - 2121" which is a suitable telephone number format for the U.S. or Canada. This telephone number string is part of the information or message entered by the author of the message, and is typically located at or near an end or the message. Note that this message is selected by the end user from a plurality of previously received messages for visual display. When the message is visually displayed, a processor of the mobile station scans to identify any telephone number strings in the message (step 406 of FIG. 4). If a telephone number string is identified in the message, the processor creates a hyperlink for the telephone number string (step 408 of FIG. 4). The hyperlink for the telephone number string is appropriately identified as such in the visually displayed message, such as by underlining, marking, or otherwise emphasizing the telephone number string in the visual display of information.

An example of a mobile station at step 408 of FIG. 4 is shown in FIG. 5. A message 502 which is an e-mail message is displayed in visual display 222 of mobile station 202. This message 502 is indicated as being sent to joe@rim.com (the end user of mobile station 202) from "Fred" having a telephone number of "888 - 2121" as provided at a bottom of message 502. The author (i.e. Fred) of this message 502 entered the telephone number as part of the text of his message. In response to a viewing of message 502 by "Fred", a hyperlink 506 was created for the telephone number string "888 - 2121", which is indicated by the underlining of the telephone number string. A cursor or position marker 504 is provided at a selected location in message 502. As shown in FIG. 5, cursor or position marker 504 is left at an end of the recipient's e-mail address joe@rim.com.

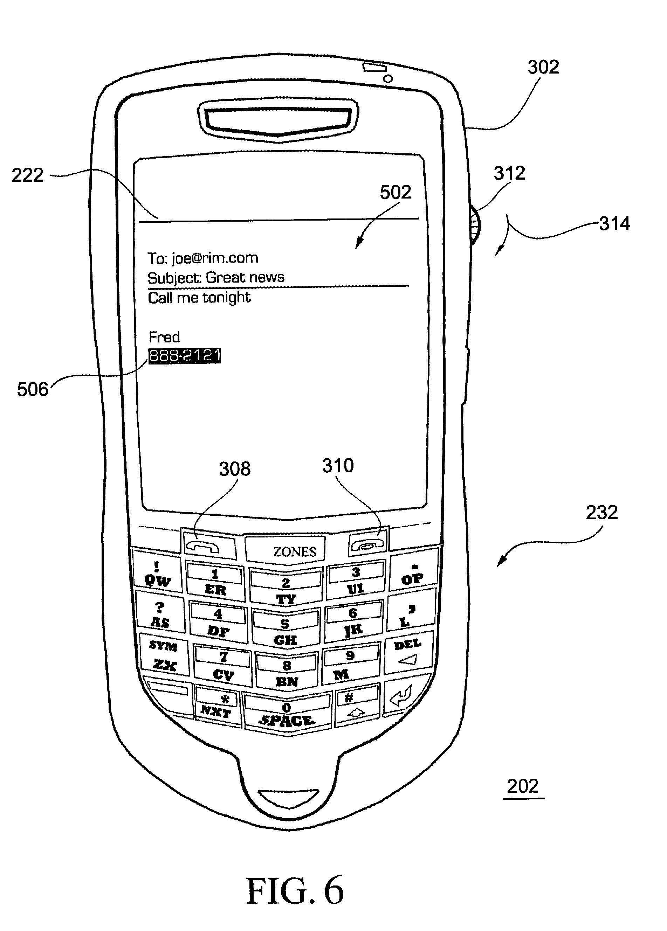

When message 502 is displayed, the end user may scroll through message 502 using a suitable viewing/selection mechanism of mobile station 202. Such scrolling moves the cursor or position marker 504 to a different location within message 502. Preferably, the viewing/selection mechanism used by the end user is a scrollwheel located on a side of the housing of the mobile station (e.g. see earlier discussion regarding FIGs. 3, 9, and 10). Referring back to the flowchart of FIG. 4, if the cursor or position marker is positioned by the end user over the hyperlink for the telephone number string (step 410 of FIG. 4), the processor causes the hyperlink to be highlighted, marked, or otherwise emphasized in the visual display by the end user (step 412 of FIG. 4). The continuing example of the mobile station at step 412 of FIG. 4 is shown in FIG. 6. Hyperlink 506 is shown as being highlighted or marked in response to the end user's selection of this information using scrollwheel 312.

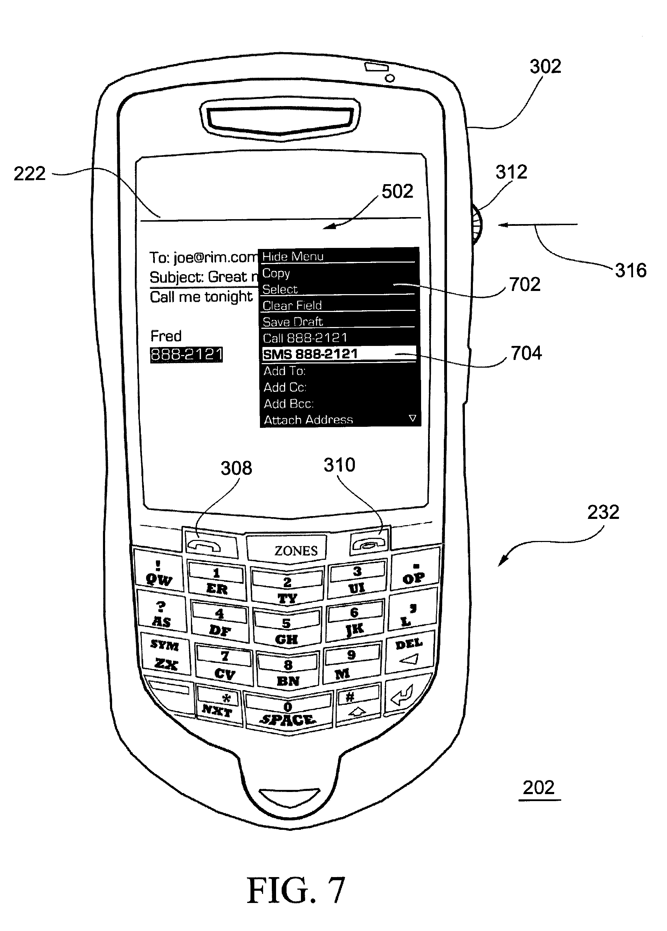

Referring back to the flowchart of FIG. 4, if the scrollwheel of the mobile station is depressed laterally while the hyperlink is selected (highlighted) (step 414 of FIG. 4), a list of functions for the telephone number string are visually displayed adjacent the message (step 422 of FIG. 4). A selected function from the list of functions may then be received and highlighted in the visual display by the mobile station (step 424 of FIG. 4). As shown in FIG. 7 for the continuing example, a list 702 of functions which are displayed in visual display 222 may be in the form of a pull-down menu. The list 702 may include functions such as "Copy", "Select", "Clear Field", "Save Draft" "Call 888-2121", and "SMS 888-2121", etc. as shown. SMS is short for Short Message Service for sending of SMS messages. By rotating scrollwheel 312, the end user may scroll through the list 702 of functions to select one of them. In FIG. 7, it is shown that "SMS 888-2121" is selected from list 702 from the end user's rotation of scrollwheel 312.

Referring again back to the flowchart of FIG. 4, the mobile station identifies whether the scrollwheel is depressed during the selection of one of the functions in the list (step 426 of FIG. 4). If so, and a function other than a telephone call function was selected, then the mobile station processes this other selected function (step 428 of FIG. 4). For example, this other function may be an initiation of an SMS message to the telephone number (e.g. see FIG. 7). If the mobile station identifies that the scrollwheel is depressed during the selection of the telephone call function at step 426, however, then the mobile station initiates a telephone call to the telephone number string of the hyperlink through the wireless network (step 430 of FIG. 4). Note that steps 402-414 and 422-430 are conventional steps for a mobile station.

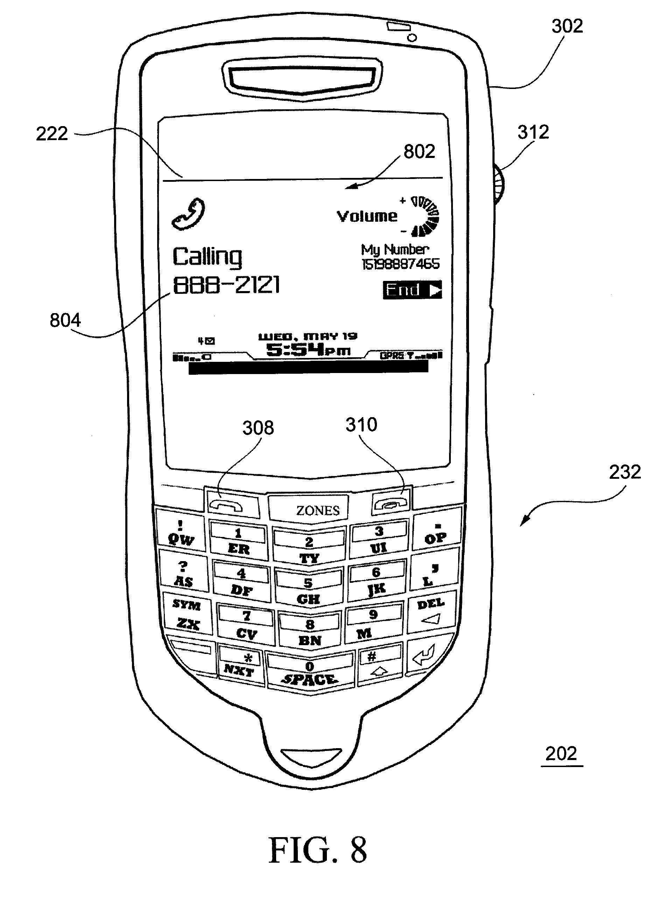

As shown in FIG. 8 in the continuing example, telephone calling information 802 is displayed in visual display 222 after the end user initiation of the telephone calling function. The telephone calling information 802 includes visually displayed information such as the telephone number 804 that is being called. Note that it took two depressions of the scrollwheel key by the end user (the first depression of step 414 and the second depression of step 426), including a selection through the list of functions of the pull-down menu, in order to place the telephone call to the telephone number as described.

Back to the flowchart FIG. 4, note that the scrollwheel key need not be actuated at the point after the hyperlink of the telephone number string is selected and highlighted in step 412. Rather, the SEND key may be depressed and detected at step 416 of FIG. 4. In response to a single depression of this SEND key after the highlighting of the hyperlink for the telephone number string, the mobile station initiates a telephone call to the telephone number string through the wireless network (step 430 of FIG. 4). The actuation of the SEND key is performed following the end user selection of the hyperlink without any intervening key depressions. No function options are displayed for the end user; the initiation of the telephone call is immediate once the SEND key is depressed. Again as shown in FIG. 8 in the continuing example, telephone calling information 802 is displayed in visual display 222 after the end user initiation of the telephone calling function by depressing SEND key 310. The telephone calling information 802 includes visually displayed information such as the telephone number 804 that is being called. Again, it took only a single depression of the SEND key by the end user in order to place the telephone call to the telephone number as described, after the highlighting of the hyperlink. The call may be terminated by the depression of the END key 310 by the end user. Further in the flowchart, other keys may be actuated in lieu of the scrollwheel actuation at step 414 or the SEND key actuation at step 416 as identified at step 418, and these alternative functions may be processed accordingly (step 420 of FIG. 4).

Again referring back to the flowchart of FIG. 4, telephone calls can also be made without regard to the receipt of messages. Beginning at a start block 450 of FIG. 4 (i.e. "Start B"), the end user may select and enter a telephone number string using telephone digits 0, 1, 2, 3, 4, 5, 6, 7, 8, 9, *, and # of the keypad (step 452 of FIG. 4). When the mobile station detects that the SEND key is depressed following the manual entry of the telephone number string (step 416 of FIG. 4), then the mobile station initiates a telephone call to the telephone number string through the wireless network (step 430 of FIG. 4). Again as shown in FIG. 8 in the continuing example, telephone calling information 802 is displayed in visual display 222 after the end user initiation of the function by depressing SEND key 310. The telephone calling information 802 includes visually displayed information such as the telephone number 804 that is being called. The call may be terminated by the depression of the END key 310 by the end user.

The initiation of a telephone call based on steps 404-416 (i.e. use of the SEND key with selected hyperlink) is highly advantageous in that a telephone call can be placed substantially immediately after the hyperlink is selected. Several processing steps may be avoided as compared to using steps 414-430. It is also advantageous that the scrollwheel on the side of the housing may be used to select the hyperlink by one hand of the end user (i.e. the hand that is holding the mobile station) while the SEND key on the front side of the housing may be depressed by the other hand of the end user (i.e. the hand that is not holding the mobile station). Further advantageous is that several alternative techniques for initiating telephone calls are provided for a more flexible and easy-to-use user interface of the mobile station, especially a mobile station providing both voice and data (e.g. e-mail) capabilities.

As described herein, a method for initiating telephone calls from a mobile station which operates in a wireless communication network may include the steps of receiving a message through a wireless receiver of the mobile station; causing the message to be visually displayed in a visual display of a user interface of the mobile station, the message including a telephone number string; causing a hyperlink for the telephone number string in the message to be created for use while the message is visually displayed in the visual display; causing the hyperlink for the telephone number string to be highlighted when selected during the visual displaying of the message; and in response to a single depression of a key of the user interface while the hyperlink is selected, causing a telephone call to the telephone number string to be initiated through the wireless communication network. The single depression of the key may be made immediately following the selection of the hyperlink without any intervening key depressions. Additional call initiation techniques are provided in combination with this technique to provide a more flexible and easy-to-use interface. A computer program product of the present application may include a storage medium and computer instructions stored in the storage medium, where the computer instructions are executable by one or more processors for initiating telephone calls with use of the above-described method.

A mobile station of the present application includes one or more processors, a wireless transceiver coupled to the one or more processors, and a user interface which includes a visual display and a plurality of keys. The wireless transceiver is operative to receive a message, such as an e-mail message, which includes a telephone number string. When the message is visually displayed in the visual display, a hyperlink for the telephone number string in the message is created. The hyperlink for the telephone number string is highlighted when selected by an end user during the visual displaying of the message (for example, when selected through use of a scrollwheel of the user interface). In response to a single depression of a key of the user interface while the hyperlink is selected, a telephone call to the telephone number string is initiated through the wireless communication network. The single depression of the key may be made immediately following the selection of the hyperlink without any intervening key depressions.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method for initiating telephone calls from a mobile station which operates in a wireless communication network, comprising:
receiving a message through a wireless receiver of the mobile station;
causing the message to be visually displayed in a visual display of a user interface of the mobile station, the message including a telephone number string;
causing a hyperlink for the telephone number string in the message to be created for use while the message is visually displayed in the visual display;
causing the hyperlink for the telephone number string to be highlighted when selected during the visual displaying of the message; and
in response to a single depression of a key of the user interface while the hyperlink is selected: causing a telephone call to the telephone number string to be initiated through the wireless communication network.

2. The method of claim 1, wherein the key comprises a mechanical switch of the user interface.

3. The method of claim 1 or 2, wherein the key is exposed on a front side of the mobile station.

4. The method of claim 1, wherein the key comprises a visual object displayed in the visual display of the user interface.

5. The method of any preceding claim, wherein the message comprises an electronic mail (e-mail) message.

6. The method of any of claims 1 to 4, wherein the message comprises data of a web page.

7. The method of any preceding claim, wherein the single depression of the key is detected after the selection of the hyperlink without any intervening key depressions.

8. The method of any preceding claim, further comprising:
causing a telephone call to be initiated through the wireless communication network in response to an end user selection of telephone digit keys followed by a single actuation of the first switch; and
wherein the telephone keys include keys 0, 1, 2, 3, 4, 5, 6, 7, 8, 9, *, and #.

9. The method of any preceding claim, wherein the key comprises a first key and the method further comprises:
in response to a single depression of a second key of the user interface while the hyperlink is selected: causing a list of functions for the telephone number string to be visually displayed.

10. The method of any of claims 1 to 8, wherein the key comprises a first key and the method further comprises:
providing a second key for use in selecting the hyperlink during the visual displaying of the message.

11. The method of any of claims 1 to 8, wherein the key comprises a first key and the method further comprises:
providing a second key for use in selecting the hyperlink during the visual displaying of the message; and
the second key comprising a scrollwheel.

12. The method of any of claims 1 to 8, wherein the key comprises a first key exposed on a front side of the mobile station and the method further comprises:
providing a second key for use in selecting the hyperlink during the visual displaying of the message;
in response to a first depression of the second key while the hyperlink is selected: causing a list of functions for the telephone number string to be visually displayed; and
in response to a second depression following the first depression of the second key: causing a telephone call to the telephone number string to be initiated through the wireless communication network.

13. A mobile station, comprising:
one or more processors;
a wireless transceiver coupled to the one or more processors;
the wireless transceiver being operative to receive a message which includes a telephone number string;
a user interface which includes a visual display and a plurality of keys;
the visual display configured to display the message;
the one or more processors being operative to:
cause a hyperlink for the telephone number string in the message to be created for use while the message is visually displayed in the visual display;
cause the hyperlink for the telephone number string to be highlighted when selected during the visual displaying of the message; and
causing a telephone call to the telephone number string to be initiated through the wireless communication network in response to a single depression of a key of the user interface while the hyperlink is selected.

14. The mobile station of claim 13, wherein the key comprises a mechanical switch of the user interface.

15. The mobile station of claim 13 or 14, wherein the key is exposed on a front side of the mobile station.

16. The mobile station of claim 13, wherein the key comprises a visual object displayed in the visual display of the user interface.

17. The mobile station of any of claims 13 to 16, wherein the message comprises an electronic mail (e-mail) message.

18. The mobile station of any of claims 13 to 16, wherein the message comprises data of a web page.

19. The mobile station of any of claims 13 to 18, wherein the single depression of the key is detected after the selection of the hyperlink without any intervening key depressions.

20. The mobile station of any of claims 13 to 19, further comprising:
the plurality of keys including telephone keys 0, 1, 2, 3, 4, 5, 6, 7, 8, 9, *, and #;
the one or more processors being further operative to:
cause a telephone call to be initiated through the wireless communication network in response to an end user selection of the telephone keys followed by a single actuation of the key.

21. The mobile station of any of claims 13 to 20, further comprising:
wherein the key comprises a first key of the plurality of keys;
the plurality of keys including a second key; and
the one or more processors being further operative to:
cause a list of functions for the telephone number string to be visually displayed in the visual display in response to a single depression of the second key of the user interface while the hyperlink is selected:

22. The mobile station of any of claims 13 to 20, further comprising:
wherein the key comprises a first key of the plurality of keys;
the plurality of keys including a second key for use in selecting the hyperlink during the visual displaying of the message.

23. The mobile station of any of claims 13 to 20, further comprising:
wherein the key comprises a first key of the plurality of keys;
the plurality of keys including a second key for use in selecting the hyperlink during the visual displaying of the message; and
the second key comprising a scrollwheel.

24. The mobile station of any of claims 13 to 20, further comprising:
wherein the key comprises a first key of the plurality of keys which is exposed on a front side of the mobile station;
the plurality of keys including a second key for use in selecting the hyperlink during the visual displaying of the message;
the one or more processors being further operative to:
cause a list of functions for the telephone number string to be visually displayed in response to a first depression of the second key while the hyperlink is selected; and
cause a telephone call to the telephone number string to be initiated through the wireless communication network in response to a second depression of the second key following the first depression.

25. A computer program product, comprising:
a storage medium;
computer instructions stored in the storage medium;
the computer instructions being executable by one or more processors for initiating telephone calls from a mobile station by:
receiving a message which includes a telephone number string;
causing a hyperlink for the telephone number string in the message to be created for use while the message is being visually displayed;
causing the hyperlink for the telephone number string to be highlighted when selected during the visual displaying of the message; and
causing a telephone call to the telephone number string to be initiated through a wireless communication network in response to a single depression of a key of a user interface of the mobile station while the hyperlink is selected.

26. The computer program product of claim 25, wherein the key comprises a visual object displayed in the visual display of the user interface of the mobile station.

27. The computer program product of claim 25 or 26, wherein the message comprises an electronic mail (e-mail) message.

28. The computer program product of claim 25 or 26, wherein the message comprises data of a web page.

29. The computer program product of any of claims 25 to 28, wherein the single depression of the key is detected after the selection of the hyperlink without any intervening key depressions.

30. The computer program product of any of claims 25 to 29, wherein the computer instructions are further executable by the one or more processors for:
causing a telephone call to be initiated through the wireless communication network in response to an end user selection of telephone keys 1, 2, 3, 4, 5, 6, 7, 8, 9, *, and # followed by a single actuation of the key.

31. The computer program product of any of claims 25 to 30, wherein the key comprises a first key of the user interface, and wherein the computer instructions are further executable by the one or more processors for:
causing a list of functions for the telephone number string to be visually displayed in response to a single depression of a second key of the user interface while the hyperlink is selected:

32. The computer program product of any of claims 25 to 30, wherein the key comprises a first key of the user interface, and wherein the computer instructions are further executable by the one or more processors for:
highlighting the hyperlink during the visual displaying of the message in response to a selection of the hyperlink with use of a second key.

33. The computer program product of any of claims 25 to 30, wherein the key comprises a first key exposed on a front side of the mobile station, and wherein the computer instructions are further executable by the one or more processors for:
highlighting the hyperlink during the visual displaying of the message in response to a selection of the hyperlink with use of a second key.
causing a list of functions for the telephone number string to be visually displayed in response to a first depression of a second key while the hyperlink is selected; and
causing a telephone call to the telephone number string to be initiated through the wireless communication network in response to a second depression of the second key following the first depression.

## Amended claims

### Amended claims in accordance with Rule 86(2) EPC.

**1.** A method for initiating telephone calls from a mobile station (202) which operates a wireless communication network (104), the method comprising:
providing a user interface which includes a SEND key (308) exposed on a front side of the mobile station (202);
receiving a message (502) through a wireless receiver (212) of the mobile station (202);
causing the message (502) to be visually displayed in a visual display (222) exposed on the front side of the mobile station (502), the message (502) including a telephone number string;
causing a hyperlink (506) for the telephone number string in the message (502) to be created for use while the message (502) is visually displayed in the visual display (222);
causing the hyperlink (506) for the telephone number string to be highlighted when selected by an end user during the visual displaying of the message (502); and
in response to a single depression of the SEND key (308) by the end user while the hyperlink (506) is selected, causing a telephone call to the telephone number string to be initiated through the wireless communication network (104).

**2.** The method of claim 1, wherein the SEND key (308) comprises a mechanical switch of the user interface.

**3.** The method of claim 1 or 2, further comprising:
providing a scrollwheel (312) on a side of the mobile station (202) for use by the end user in selecting the hyperlink (506) during the visual displaying of the message (502);
in response to a first depression of the scrollwheel (312) while the hyperlink (506) is selected, causing a list of functions for the telephone number string to be visually displayed; and
in response to a second depression of the scrollwheel (312) following the first depression, causing a telephone call to the telephone number string to be initiated through the wireless communication network (104).

**4.** The method of claim 1, wherein the SEND key (308) comprises a visual object displayed in the visual display (222) of the user interface.

**5.** The method of any preceding claim, wherein the message (502) comprises an electronic (e-mail) message.

**6.** The method of any of claims 1 to 4, wherein the message (502) comprises data of a web page.

**7.** The method of any preceding claim, wherein the single depression of the SEND key (308) is detected after the selection of the hyperlink (506) without any intervening key depressions by the end user.

**8.** The method of any preceding claim, further comprising:
causing a telephone call to be initiated through the wireless communication network (104) in response to an end user selection of telephone digit keys followed by a single actuation of the SEND key (308); and
wherein the telephone keys include keys 0, 1, 2, 3, 4, 5, 6, 7, 8, 9, *, and #.

**9.** The method of any preceding claim, further comprising:
providing the user interface with a viewing and selecting mechanism (312); and
in response to a single depression of the viewing and selecting mechanism (312) while the hyperlink (506) is selected: causing a list of functions for the telephone number string to be visually displayed.

**10.** The method of any claims 1 to 8, further comprising:
providing a viewing and selecting mechanism (312) for use by the end user in selecting the hyperlink (506) during the visual displaying of the message (502).

**11.** The method of any of claims 1 to 8, further comprising:
providing a viewing and selecting mechanism (312) for use by the end user in selecting the hyperlink (506) during the visual displaying of the message (502); and
the viewing and selecting mechanism (312) comprising a scrollwheel.

**12.** The method of any of claims 1 to 8, further comprising:
providing a viewing and selecting mechanism (312) for use by the end user in selecting the hyperlink (506) during the visual displaying of the message (502);
in response to a first depression of the viewing and selecting mechanism (312) while the hyperlink (506) is selected: causing a list of functions for the telephone number string to be visually displayed; and
in response to a second depression of the viewing and selecting mechanism (312) following the first depression, causing a telephone call to the telephone number string to be initiated through the wireless communication network (104).

**13.** A mobile station (202), comprising:
one or more processors (238);
a wireless transceiver (211) coupled to the one or more processors (238);
the wireless transceiver (211) being operative to receive a message (502) which includes a telephone number string;
a user interface which includes a visual display (222) and a plurality of keys (232);
the plurality of keys (232) including a SEND key (308) exposed on a front side of the mobile station (202);
the visual display (222) exposed on the front side of the mobile station (202) and configured to display the message (502);
the one or more processors (238) being operative to:
cause a hyperlink (506) for the telephone number string in the message (502) to be created for use while the message (502) is visually displayed in the visual display (222);
cause the hyperlink (506) for the telephone number string to be highlighted when selected by the end user during the visual displaying of the message (502); and
cause a telephone call to the telephone number string to be initiated through the wireless communication network (104) in response to a single depression of the SEND key (308) of the user interface while the hyperlink (506) is selected.

**14.** The mobile station (202) of claim 13, wherein the SEND key comprises a mechanical switch of the user interface.

**15.** The mobile station (202) of claim 13 or 14, further comprising:
the plurality of keys (232) including a scrollwheel (312) on a side of the mobile station (202) for use by the end user in selecting the hyperlink (506) during the visual displaying of the message (502);
the one or more processors (238) being further operative to cause a list of functions for the telephone number string to be visually displayed in the visual display (222) in response to a first depression of the scrollwheel (312) while the hyperlink (506) is selected; and
the one or more processors (238) being further operative to cause a telephone call to the telephone number string to be initiated through the wireless communication network (104) in response to a second depression of the scrollwheel (312) following the first depression.

**16.** The mobile station (202) of claim 13, wherein the SEND key comprises a visual object displayed in the visual display (222) of the user interface.

**17.** The mobile station (202) of any of claims 13 to 16, wherein the message (502) comprises an electronic mail (e-mail) message.

**18.** The mobile station (202) of any of claims 13 to 16, wherein the message (502) comprises data of a web page.

**19.** The mobile station (202) of any of claims 13 to 18, wherein the one or more processors are operative to detect the single depression of the SEND key (308) after the selection of the hyperlink (506) without any intervening key depressions by the end user.

**20.** The mobile station (202) of any of claims 13 to 19, further comprising the plurality of keys (232) including telephone keys 0, 1, 2, 3, 4, 5, 6, 7, 8, 9, *, and #;
the one or more processor (238) being further operative to:
cause a telephone call to be initiated through the wireless communication network (104) in response to an end user selection of the telephone keys followed by a single actuation of the SEND key (308).

**21.** The mobile station (202) of any of claims 13 to 20, further comprising:
the plurality of keys (232) including a viewing and selecting mechanism (312); and
the one or more processors (238) being further operative to:
cause a list of functions for the telephone number string to be visually displayed in the visual display (222) in response to a single depression of the viewing and selecting mechanism (312) while the hyperlink (506) is selected.

**22.** The mobile station (202) of any of claims 13 to 20, further comprising:
the plurality of keys including a viewing and selecting mechanism (312) for use in selecting the hyperlink (506) during the visual displaying of the message (502).

**23.** The mobile station (202) of any of claims 13 to 20, further comprising:
the plurality of keys including a viewing and selecting mechanism (312) for use in selecting the hyperlink (506) during the visual displaying of the message (502); and
the viewing and selecting mechanism (312) comprising a scrollwheel.

**24.** The mobile station (202) of any of claims 13 to 20, further comprising:
the plurality of keys (232) including a viewing and selecting mechanism (312) for use by the end user in selecting the hyperlink (506) during the visual displaying of the message (502);
the one or more processors (238) being further operative to:
cause a list of functions for the telephone number string to be visually displayed in response to a first depression of the viewing and selecting mechanism (312) while the hyperlink (506) is selected; and
cause a telephone call to the telephone number string to be initiated through the wireless communication network (104) in response to a second depression of the viewing and selecting mechanism (312) following the first depression.

**25.** A computer program product for initiating telephone calls from a mobile station, the computer program product comprising a storage medium and computer instructions stored in the storage medium, the computer instructions being executable by one or more processors for performing all the steps of the methods claimed by any one of claims 1-12, when said program is run on a computer.
